# EUROPÄISCHE PATENTSCHRIFT

(11) **EP 0 568 068 B1**
(45) Veröffentlichungstag und Bekanntmachung des Hinweises auf die Patenterteilung: **09.10.1996**
(21) Anmeldenummer: 93106975.1
(22) Anmeldetag: 29.04.1993
(51) Int. Cl.: G01L 5/16, G01L 1/02

(54) **Kraftmessvorrichtung**
Force measuring device
Dispositif de mesure de force

(30) Priorität: 30.04.1992 DE 4214291
(43) Veröffentlichungstag der Anmeldung: 03.11.1993
(73) Patentinhaber: Pfister Messtechnik GmbH, D-86165 Augsburg (DE)
(72) Erfinder: Häfner, Hans Wilhelm, W-8890 Aichach-Walchshofen (DE)
(74) Vertreter: Fiener, Josef

(56) Entgegenhaltungen:
- EP-A- 0 437 284
- EP-A- 0 440 012
- MESSEN UND PRUFEN Bd. 27, Nr. 10, Oktober 1991, MUNCHEN DE Seiten 446 - 453 H. W.HäFNER ET AL 'ELASTOSTATISCHER KRAFTSENSOR'

## Beschreibung

Die Erfindung betrifft eine Kraftmeßvorrichtung gemäß dem Oberbegriff des Patentanspruchs 1.

Die EP 0 205 509 C1 beschreibt eine Kraftmeßvorrichtung mit einem topfförmigen Außenelement und einem darin unter Bildung eines engen Ringspalts eingesetzten Kolbenelement, wobei der enge Ringspalt und ein zwischen der inneren Stirnfläche des Kolbenelements und dem Boden des topfförmigen Außenelements gebildeter zylindrischer Raum mit elastomerem Material gefüllt ist, das fest an den Kontaktflächen haftet und im wesentlichen blasenfrei ist Ein Drucksensor ist in der Bodenwand des Außenelements eingesetzt und ist in Druckübertragungskontakt mit dem elastomeren Material. Hierbei werden nur Kräfte in axialer Richtung des Ringspaltes, i. a. Abstützkräfte erfaßt.

Die EP 0 302 437 A2 beschreibt eine Kraftmeßvorrichtung mit beispielsweiser Anwendung auf eine Anhängerkupplung, mit einem Aufbau nach dem Prinzip der vorstehend beschriebenen Kraftmeßvorrichtung. Hierbei wird jedoch kein topfförmiges Außenelement verwendet, sondern ein zylindrisches Außenelement und ein dazu passendes Innenelement, das eine Durchgangsöffnung besitzt. Der enge Ringspalt ist in einen ersten und zweiten Ringspaltbereich mit jeweils unterschiedlichem Ringdurchmesser durch einen zylindrischen Ringraum unterteilt, der als Übergangsstufe ausgebildet und ebenfalls mit elastomerem Material gefüllt ist. Mindestens ein Drucksensor kann in dem elastomeren Material im Ringraum eingebettet sein. Sich gegenüberstehende Radialflächen des Innen- und Außenelements bilden Anschläge, die eine Relativbewegung zwischen Innen- und Außenelement in Zugrichtung zueinander eng begrenzen. Zur Messung in einer und in einer entgegengesetzten Richtung sind zwei derartige Kraftmeßvorrichtungen gegeneinandergeschaltet. Hierbei ist lediglich eine Messung in axialer Richtung, nämlich als Zug- oder als Schubkraft möglich. Zur Messung einer radial gerichteten Kraft, hier einer Aufstützkraft in Vertikalrichtung ist eine gesonderte Kraftmeßvorrichtung erforderlich.

Aus der EP 0 428 890 A2, dort insbesondere Fig. 8, ist desweiteren eine Kraftmeßeinrichtung bekannt, mit der in einem Winkel, insbesondere rechtwinklig zueinander wirkende Kräfte erfaßbar sind, wobei wenigstens zwei zueinander rechtwinklig stehende Kraftmeßelemente mit einem Aufbau gemäß der erstgenannten Druckschrift vorhanden sind. Dementsprechend müssen jeweils zwei topfförmige Außenelemente und darin eingepaßte Innenelemente vorhanden sein, sowie je ein Drucksensor. Hierdurch wird die Herstellung einer an einem gemeinsamen Trägerelement angeordneten Kraftmeßvorrichtung relativ aufwendig. Zudem ist in dieser Druckschrift die Möglichkeit der Messung von an der Anhängerkupplung angreifenden Momenten beschrieben, wobei eine Kraftmeßzelle unter einem bestimmten Abstand zur Zugöse angeordnet ist und hierdurch auftretende Momente beim Bremsen oder bei Seitenkräften erfaßt werden sollen. Durch den erforderlichen Abstand von der Zugöse ist diese Bauweise jedoch relativ platzaufwendig.

Demzufolge liegt der Erfindung die Aufgabe zugrunde, eine derartige Kraftmeßvorrichtung hinsichtlich einfachem Aufbau und Kompaktheit zu verbessern.

Diese Aufgabe wird gelöst durch eine Kraftmeßvorrichtung mit den Merkmalen des Patentanspruches 1.

Bei dieser vorgeschlagenen Ausbildung ist von besonderem Vorteil, daß bereits mit einem einzigen Drucksensor sowohl axiale Kräfte als auch hierzu im Winkel angreifende Kraftkomponenten über die Wirkung eines der Axialkraft überlagerten Momentes gemessen werden können. Hierzu bedarf es nicht zusätzlicher Abstände, in der die Kraftmeßzelle angeordnet werden muß oder sonstiger Übertragungsmechanismen, sondern wird vielmehr die an dem Innen- oder Außenteil vorhandene axiale Länge zur Verwirklichung der zur Momentenmessung und damit der radialen Kraftkomponente gegebenen Hebel benutzt. Hierbei macht man sich zunutze, daß selbst bei einem engen Ringspalt und einer exakten Führung in dem elastomeren Material bei einer radialen oder quer gerichteten Beanspruchung einer für die axiale Beanspruchung ausgelegten Kraftmeßzelle sich das Innenelement bezüglich des Außenelementes um eine Momentanachse auf der Mittelachse minimal verkanten kann. Diese Verkantung wird über die radial erweiterten Abstufungen des Innen- und Außenelementes in Art eines winkelförmigen Hebels an den außermittig angeordneten Drucksensor weitergeleitet. Somit ist beispielsweise beim Stillstand eines Anhängerfahrzeuges in der Anwendung der Kraftmeßvorrichtung bei einer Anhängerkupplung die Stützlast durch das auf das Innenteil wirkende Drehmoment erfaßbar, während dann im Fahrtbetrieb die Schubkräfte z. B. bei Bergabfahrt oder dgl. gemessen werden können und für eine Antiblockierregelung und dgl. verwendet werden können.

Für die gleichzeitige Erfassung der Axial- und Radialkräfte während der Fahrt sind bevorzugt zwei sich diametral gegenüberliegende Drucksensoren vorgesehen, so daß deren Meßwerte für die Erfassung der Axialkraft addiert werden, während die Subtraktion ihrer Meßwerte ein proportionales Signal für die angreifende Radialkraftkomponente bildet, da durch die minimale Verdrehung des Innenelementes relativ zum Außenelement um eine Momentanachse auf der Mittelachse der eine Drucksensor entlastet wird, während der andere durch das der Radialkraftkomponente proportionale Drehmoment zusätzlich belastet wird. Somit ist eine exakte meßtechnische Trennung zwischen der axialen und radialen Kraftkomponente möglich.

Weitere vorteilhafte Ausgestaltungen sind Gegenstand der Unteransprüche. Nachfolgend werden drei Ausführungsbeispiele anhand der Zeichnung näher erläutert und beschrieben.

Es zeigen:
- Fig. 1: eine Kraftmeßvorrichtung mit einem Drucksensor in der beispielhaften Anwendung als Anhängerkupplung in Schnittdarstellung;
- Fig. 2: eine abgewandelte Kraftmeßvorrichtung mit zwei Drucksensoren; und
- Fig. 3: eine abgewandelte Kraftmeßvorrichtung mit drei Drucksensoren.

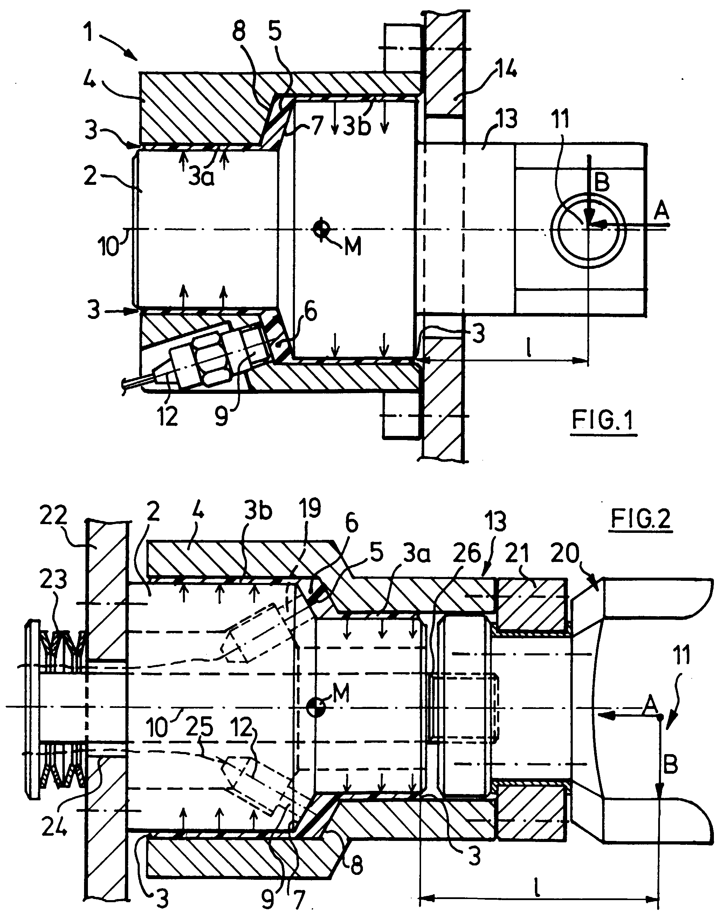

In Fig. 1 ist eine Kraftmeßvorrichtung 1 im Längsschnitt dargestellt, die im wesentlichen ein starres, kolbenförmiges Innenelement 2 und ein starres, zylinderförmiges Außenelement 4 umfaßt, zwischen denen in einem engen Ringspalt 3 elastomeres Material 5 eingebracht ist. Das elastomere Material 5, beispielsweise Silikon oder Gummi ist bevorzugt blasenfrei und festhaftend, z. B. durch Vulkanisation auf den sich gegenüberliegenden Umfangs- bzw. Innenflächen des Innen- und Außenelementes 2, 4 aufgebracht. Hierbei ist der Ringspalt 3 bevorzugt in zwei Ringspalt-Bereiche 3a und 3b mit unterschiedlichen Durchmessern unterteilt, so daß im Übergang zwischen den Ringspaltbereichen 3a und 3b ein Ringraum 6 begrenzt wird, der ebenfalls mit dem elastomeren Material 5 gefüllt ist. Der Ringraum 6 ist zudem durch schrägverlaufende Abstufungen 7 und 8 am Innenelement 2 bzw. am Außenelement 4 begrenzt. An der dem Außenelement 4 zugeordneten Abstufung 8 ist hier ein außermittig angeordneter Drucksensor 9 in Art einer Zündkerze eingeschraubt, wobei die zum elastomeren Material 5 hin liegende Stirnseite in Druckübertragungskontakt mit diesem ist. Die Abstufungen 7 und 8 des Innen- und Außenelementes 2, 4 sind in einem Winkel von etwa 70° bis 75° zur Mittelachse 10 ausgerichtet, wobei die Stirnseite des Drucksensors 9 in etwa parallel zu der Abstufung 8 liegt.

Das Innenelement 2 ist hier auf die rechte Seite verlängert und bildet an seinem rechten Ende eine Krafteinleitungsstelle 11, an der axiale Kräftekomponenten A und radiale Kräftekomponenten B angreifen. Durch diese Verlängerung des Innenelements 2 wird somit ein Fortsatz 13 gebildet, wobei die an seinem äußeren Ende gebildete Krafteinleitungsstelle 11 um eine Hebellänge l von der hier rechten Stirnseite des Außenelementes 4 und damit von dem Ringspalt 3 beabstandet ist. Bevorzugt ist hierbei die Ausrichtung des Drucksensors 9 und die Hebellänge l so gewählt, daß die Achse 12 des Drucksensors 9 auf die Krafteinleitungsstelle 11 ausgerichtet ist.

Wirkt nun an der Krafteinleitungsstelle 11 eine radiale Kraftkomponente B, so wird der Fortsatz 13 und das damit verbundene Innenelement 2 geringfügig nach unten gedrückt, soweit dies die Führung des Innenteils 2 durch das elastomere Material 5 erlaubt. Hierbei wird der durchmessergrößere Ringspaltbereich 3b in der unteren Hälfte zusammengedrückt, während die obere Hälfte des Ringspaltbereiches 3b geringfügig entlastet wird, soweit dies die Härte des elastomeren Materials 5 erlaubt. Diese Bewegungen liegen im Tausendstel- oder Hundertstel-Millimeter-Bereich. Durch diese minimale Verkantungsbewegung ergibt sich ein geringfügiges Verdrehen des Innenelements 2 bezüglich des Außenelements 4, wodurch sich etwa in der Mitte des durchmesserstärkeren Bereichs des Innenelements 2 ein Drehpol oder eine Momentanachse M ausbildet. Durch diese Belastungsbewegung und die minimale Verdrehung um die Momentanachse M wird auch der durchmesserkleinere Ringspaltbereich 3a gegenüber dem Ausgangszustand ent- bzw. belastet. Hierbei ist die Belastung gegenüber dem Ringspaltbereich 3b entgegengesetzt, wie dies durch kurze Pfeile angedeutet ist. Durch diese geringfügige Verschwenkung oder Verkantung des Innenelementes 2 bezüglich des Außenelementes 4 wird der untere Bereich des Ringraumes 6 stärker belastet als der obere Bereich, so daß infolge der Druckübertragung des elastomeren Materials 5 eine erhöhte Belastung an den Drucksensor 9 weitergegeben wird, der proportional zu der einwirkenden radialen Kraftkomponente B ist. Diese erhöhte Druckbelastung im unteren Bereich des Ringraumes 6 verursacht im Drucksensor 9 erhöhte Meßwerte, die in ansich bekannter Weise, z. B. über Dehnmeßstreifen oder piezoresistive Widerstände auf einer Membran in elektrische Signale umgewandelt werden und dann an ein Auswertegerät weitergeleitet werden.

Es sei darauf hingewiesen, daß mit dem hier einzigen Drucksensor 9 in der üblichen Weise, wie sie in den eingangs gewürdigten Druckschriften beschrieben ist, neben der radialen Kraftkomponente auch die axiale Kraftkomponente A erfaßbar ist. Somit wird hier eine Kraftmeßvorrichtung 1 verwirklicht, die neben axial ausgerichteten Kräften über die durch im Winkel hierzu stehende, insbesondere radiale Kräfte verursachte Drehmomente und damit Verkantungen der Innen- und Außenelemente zueinander auch die in einer von der Axialrichtung abweichenden Richtung wirkende Kraftkomponente erfaßt.

In Fig. 2 ist eine abgewandelte Ausführung der Kraftmeßvorrichtung gezeigt, wobei hier die Anordnung des Innen- und Außenelements 2, 4 im wesentlichen umgekehrt ist und somit zwei Drucksensoren 9, 19 im Innenteil 2 angeordnet sind, während der Fortsatz 13 mit der Hebellänge l und die Krafteinleitungsstelle 11 am Außenelement 4 vorgesehen ist. Hierdurch ergibt sich bei im wesentlichen gleicher Baulänge eine Vergrößerung des wirksamen Hebelarms l, so daß eine höhere Meßgenauigkeit hinsichtlich der Radialkomponente erreicht werden kann. Desweiteren sind hier zwei Drucksensoren 9, 19 vorgesehen, die in einer Querschnittsebene zur Mittelachse 10 um 180° versetzt, also hier in der Zeichenebene angeordnet sind. Diese Anordnung hat den Vorteil, daß die Axialkräfte A und die Radialkräfte B, hier vertikal wirkende Abstützkräfte auf eine beispielhaft dargestellte Anhängerkupplung 20 auch bei gleichzeitigem Auftreten der Komponenten getrennt ausgewertet werden können. Tritt beispielsweise an der Anhängerkupplung 20 eine Schubkraft auf, so werden beide Drucksensoren 9, 19 symmetrisch belastet, so daß eine Addition ihrer Meßwerte einen der Schubkraft proportionalen Wert liefert. Die Drucksensoren 9, 19 können jedoch auch so ausgelegt werden, daß jeder unabhängig voneinander mißt und die beiden Meßwerte miteinander verglichen werden oder Mittelwerte gebildet werden.

Wenn nun eine von der axialen Richtung abweichende Kraftkomponente B, hier z. B. eine vertikal wirkende Stützlast wirkt, wird durch Verkanten des Außenelementes 4 bezüglich des starr an einem Rahmen 22 angeordneten Innenelementes 2 der eine Drucksensor 9 zusätzlich belastet, während der andere Drucksensor 19 entsprechend entlastet wird. Die Subtraktion der beiden Werte liefert somit ein Maß für die Größe der radial wirkenden Vertikalkraft bzw. des Drehmomentes.

Am Außenelement 4 ist am rechten Ende ein Flansch 21 vorgesehen, der das Kupplungsmaul der Anhängerkupplung 20 hintergreift und somit eine Verdrehbewegung des Kupplungsmauls ermöglicht. Am linken Ende der Anhängerkupplung 20 sind zum Innenelement 2 hin Tellerfedern 23 vorgesehen, die das Innenelement 2 bezüglich des Außenelementes 4 vorspannen, wie dies in der EP-0 437 284 A2 beschrieben ist. An dem hier linken Ende des Innenelementes 2 sind mit Strichpunktlinien Schraubverbindungen angedeutet, mit denen die Anhängerkupplung 20 über das Innenelement 2 an dem Fahrzeugrahmen 22 befestigt werden kann. Dieses Rahmenteil 22 weist eine zentrale Bohrung 24 auf, in dem, wie hier strichliert dargestellt, die Signalkabel 25 der Drucksensoren 9, 19 aus dem Inneren des hohl ausgeführten Innenelementes 2 herausgeführt sind. Der übrige Aufbau hinsichtlich des elastomeren Materials 5, des Ringspaltes 3 und des Ringraumes 6 ist entsprechend der Fig. 1 ausgebildet und mit gleichen Bezugszeichen versehen. Desweiteren ist im Innern des Innenelements 2 ein Zuganker 26 angeordnet, der mit dem Kupplungsmaul in Verbindung steht und die Vorspannung der Tellerfedern 23 überträgt. Zugleich dient dieser Zuganker 26 bei Anschlag der Tellerfedern 23 als Überlastschutz, damit bei Extrembelastungen das Außenelement 4 bei Beschädigung des elastomeren Materials 5 nicht vom Innenelement abgezogen werden kann. Entsprechendes gilt für Fig. 1, wo ein Rahmenteil 14 das Herausreißen des Innenelements 2 verhindert, jedoch noch genügend Bewegungsspielraum für die (minimalen) Axial- und Radialbewegungen aufgrund der Kräfte A und B zuläßt.

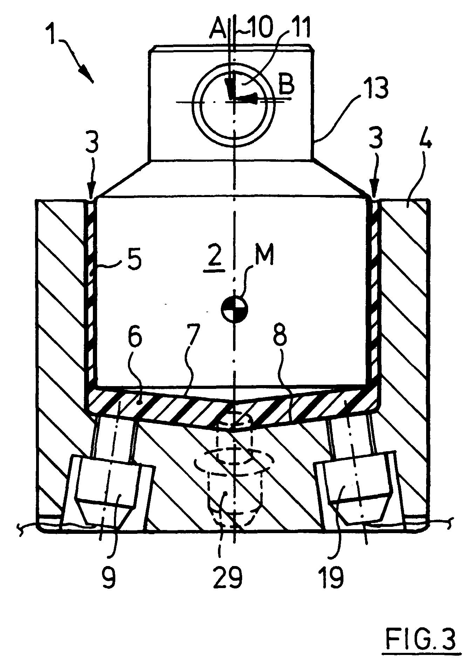

In Fig. 3 ist eine weitere Ausführungsform der Kraftmeßvorrichtung 1 gezeigt, wobei hier drei Drucksensoren 9, 19 und 29 an dem topfförmigen Außenelement 4 angeordnet sind. Alle drei Drucksensoren 9, 19 und 29 stehen hierbei in Druckübertragungskontakt mit dem elastomeren Material 5, das an der Unterseite des kolbenförmigen Innenelementes 2 den Ringraum 6 ebenso wie den engen Ringspalt 3 ausfüllt. Die Drucksensoren 9 und 19 erfassen hierbei ebenso wie bei der Ausführungsform gemäß Fig. 2 (minimale) Verschwenkbewegungen des Innenelementes 2 aufgrund der Krafteinwirkung der radialen Kraftkomponente B, wobei das Innenelement 2 dazu tendiert, um die Momentanachse M in einer Bewegungsrichtung in der Zeichenebene zu verschwenken bzw. zu verkanten. Darüberhinaus ist der Drucksensor 29 um 90° zu den Drucksensoren 9 und 19 versetzt, so daß bei einer radialen Kraftkomponente B, die nicht exakt in Zeichenebene verläuft, ebenso eine Kraft- bzw. Drehmomentmessung möglich ist. Hierbei würde die Momentanachse M nicht exakt senkrecht zur Zeichenebene verlaufen, sondern zu dieser ebenfalls geringfügig geneigt sein bzw. gar als dreidimensionaler Drehpol M ausgebildet sein.

Somit läßt sich mit einer derartigen Anordnung der Drucksensoren eine dreidimensionale Erfassung der angreifenden Kraftkomponenten durchführen. Neben der Radialkrafterfassung über die Drehmomentenmessung um die Momentanachse bzw. Momentandrehpol M läßt sich dabei durch Addition der Meßwerte an den drei Drucksensoren 9, 19 und 29 ebenfalls die Axialkraft messen. Es sei darauf hingewiesen, daß neben den am Umfang des Ringraumes 6 angeordneten Drucksensoren auch wie beim Stand der Technik ein mittig angeordneter Drucksensor vorgesehen sein kann, der jedoch dann nur die Axialkraft A erfassen kann. Auch können, wie im Zusammenhang mit Fig. 1 beschrieben, für jede Dimension X-Y-Z nur jeweils ein Drucksensor am Umfang des Ringraums 6 vorgesehen sein, also somit beispielsweise der links dargestellte Drucksensor 9 entfallen. Gegenüber der hier dargestellten Anordnung der drei Drucksensoren 9, 19, 29 in einem Teilungswinkel von 90°, 180° und 270° können die drei Drucksensoren auch gleichmäßig am Umfang unter einem Teilungswinkel von je 120° angeordnet sein. Wesentlich ist jedoch die Anordnung der Drucksensoren im Abstand von der Mittelachse 10, so daß die Verkantungsbewegung des Innenelementes 2 je nach Richtung der Verkantungsbewegung und damit der Momentanachse M an den entsprechenden Drucksensoren eine zusätzliche Be- oder Entlastung ergibt und damit ein Maß für die Größe des an der Krafteinleitungsstelle 11 wirkenden Drehmomentes (bzw. der Radialkraftkomponente B unter Berücksichtigung des Hebelarmes zwischen Krafteinleitungsstelle 11 und Drehpol M) liefert.

Wie bei den vorher beschriebenen Ausführungsformen ist auch hier der Ringraum 6 durch schräg zur Mittelachse 10 verlaufende Flächen 7 und 8 begrenzt und die Drucksensoren 9, 19 und 29 senkrecht zu diesen schrägen Flächen angesetzt, so daß die Mittelachse der Drucksensoren 9, 19 und 29 etwa in der Krafteinleitungsstelle 11 zusammenlaufen. Die Momentanachse M ist hierbei etwa im unteren Drittel des kolbenförmigen Innenelementes 2 angesiedelt, so daß sich zwischen dem Drehpol M und der Krafteinleitungsstelle 11 ein erheblicher Hebelarm ergibt, während der zweite Hebelarm des in Art eines Winkelhebels wirkenden Innenelementes 2 sich als Abstand vom Drucksensor bis zur Mittelachse 10 ergibt. Um hier möglichst große Hebelverhältnisse zu schaffen, sind die Drucksensoren 9, 19 und 29 möglichst weit am Umfang des Ringraums 6 angesiedelt, während andererseits die Krafteinleitungsstelle 11 möglichst weit von der Momentanachse M entfernt ist. Hierbei ist ein möglichst weit auskragender Fortsatz 13 zweckmäßig.

Je nach der Größenordnung der angreifenden Radialkraftkomponente wird auch die Spaltdicke des Ringspaltes 3 und die Härte des eingefüllten elastomeren Materials 5 angepaßt. Wenn beispielsweise im Verhältnis zur Axialkraft A nur geringe Radialkräfte B zu erwarten sind, kann die Spaltdicke des Ringspaltes 3 relativ groß und die (Gummi-)Härte des elastomeren Materials 5 relativ gering gewählt werden, so daß sich eine relativ biegeweiche Lagerung des Innenelementes 2 ergibt. Hierdurch sind relativ große Verkantungsbewegungen im Zehntel- bis Hundertstel-Millimeter-Bereich möglich, so daß entsprechend große Ausschläge an den Drucksensoren 9, 19 und 29 auftreten können.

Wenn andererseits sehr große radiale Kraftkomponenten B auftreten können, wird die Spaltdicke des Ringspaltes 3 relativ gering gewählt und/oder die (Shore-)Härte des elastomeren Materials 5 relativ groß gewählt, so daß bei einer Verkantungsbewegung verhindert wird, daß das Außen- und Innenteil am oberen Ende des Ringspaltes 3 zusammenstoßen. Die Auswahl der Spaltstärke z. B. im Bereich zwischen 0,1 bis 1 mm und einer Shorehärte von 40 bis 80 ist dabei in Anpassung an die jeweiligen Größenverhältnisse der Kräftekomponenten in das Wissen des Fachmannes gestellt.

Darüberhinaus hat auch die Höhe des Ringspaltes 3 noch einen Einfluß auf die Verschwenkbarkeit zwischen Außen- und Innenelement. Wird beispielsweise die Eintauchtiefe des Innenelementes 2 im Außenelement 4 und damit die Höhe des Ringspaltes 3 reduziert, so wandert die Momentanachse M in Richtung zur Krafteinleitungsstelle 11 hin, so daß der effektive Hebelarm l relativ klein wird. Im allgemeinen hat sich für ausreichende Meßgenauigkeit, insbesondere geringe Hysterese und zugleich ausreichende Ansprechempfindlichkeit eine Ringspalthöhe von etwa dem Radius des Innenelementes 2 erwiesen.

## Patentansprüche

1. Kraftmeßvorrichtung mit einem starren, kolbenförmigen Innenelement (2) und einem starren, zylinderförmigen Außenelement (4) mit einer zu Umfangsflächen des Innenelements (2) komplementären Innenkontur; einem engen Ringspalt (3, 3a, 3b) zwischen sich gegenüberliegenden Flächen des Innen- und Außenelements; elastomerem, im wesentlichen blasenfreiem Material (5), das im Ringspalt (3, 3a, 3b) vorgesehen ist und fest an den Kontaktflächen haftet; einem zwischen dem Innen- und Außenelement (2, 4) gebildeten Ringraum (6), der ebenfalls mit dem elastomeren Material (5) gefüllt ist; und wenigstens einem Drucksensor (9), der in Druckübertragungskontakt mit dem elastomeren Material (5) im Ringraum (6) steht,
dadurch gekennzeichnet, daß
der Drucksensor (9) außermittig von der Mittelachse (10) angeordnet ist und zur Erfassung sowohl axialer Kraftkomponenten (A) als auch radialer Kraftkomponenten (B) ausgebildet ist, die an einer Krafteinleitungsstelle (11) einwirken, wobei die Spaltdicke des Ringspaltes (3) und die Härte des elastomeren Materials (5) derart gewählt sind, daß bei Beaufschlagung der Krafteinleitungsstelle (11) mit einer radialen Kraftkomponente (B) eine Momentanachse (M) auf der Mittelachse (10) ausgebildet ist.

2. Vorrichtung nach Anspruch 1,
dadurch gekennzeichnet, daß
der enge Ringspalt (3) in einen ersten und zweiten Ringspaltbereich (3a, 3b) unterteilt ist, die unterschiedliche Durchmesser aufweisen und dazwischen radial erweiterte Abstufungen (7, 8) zur Begrenzung des Ringraumes (6) vorgesehen sind.

3. Vorrichtung nach Anspruch 1 oder 2,
dadurch gekennzeichnet, daß
die Momentanachse (M) etwa in der Querschnittsebene des Ringraumes (6) angeordnet ist.

4. Vorrichtung nach einem der Ansprüche 1 bis 3,
dadurch gekennzeichnet, daß
der Drucksensor (9) innerhalb des Innenelements (2) angeordnet ist und durch die Abstufung (7) hindurch bis zum Ringraum (6) ragt.

5. Vorrichtung nach einem der Ansprüche 1 bis 3,
dadurch gekennzeichnet, daß
der Drucksensor (9) am Außenelement (4) angeordnet ist und durch die Abstufung (8) hindurch bis zum Ringraum (6) ragt.

6. Vorrichtung nach einem der Ansprüche 2 bis 5,
dadurch gekennzeichnet, daß
die Abstufungen (7, 8) in einem Winkel von etwa 75° zur Mittelachse (10) des Innen- und Außenelements (2, 4) ausgerichtet sind und der Drucksensor (9) senkrecht zu den Abstufungen (7, 8) ausgerichtet ist.

7. Vorrichtung nach einem der Ansprüche 1 bis 6,
dadurch gekennzeichnet, daß
die Mittelachse (12) des Drucksensors (9) auf die Krafteinleitungsstelle (11) ausgerichtet ist.

8. Vorrichtung nach einem der Ansprüche 1 bis 7,
dadurch gekennzeichnet, daß
wenigstens zwei am Umfang des Ringraumes (6) verteilt angeordnete Drucksensoren (9, 19, 29) vorgesehen sind.

9. Vorrichtung nach einem der Ansprüche 1 bis 8,
dadurch gekennzeichnet, daß
am Innen- oder Außenelement (2, 4) ein vom Ringspalt (3, 3a, 3b) um eine Hebellänge (l) auskragender Fortsatz (13) mit der Krafteinleitungsstelle (11) vorgesehen ist.

10. Verwendung einer Kraftmeßvorrichtung nach einem der Ansprüche 1 bis 9,
dadurch gekennzeichnet, daß
unter Berücksichtigung der Hebellänge (l) und des Abstandes des/der Drucksensors/en (9, 19, 29) von der Mittelachse (10) das an der Krafteinleitungsstelle (11) angreifende Drehmoment berechnet wird.

## Claims

1. A force measuring device comprising a rigid, piston-type inner element (2) and a rigid, cylindrical outer element (4) having an interior surface complementary to the peripheral surfaces of the inner element (2); a narrow annular gap (3, 3a, 3b) between opposing surfaces of the inner and outer elements; an elastomeric, essentially bubble-free material (5) provided in the annular gap (3, 3a, 3b) and fixedly adhering to the contact surfaces; a ring space (6) formed between the inner and outer elements (2, 4) and filled with such elastomeric material (5) as well; and at least one pressure sensor (9) being in pressure transmission contact to the elastomeric material (5) in the ring space (6),
characterized in that
the pressure sensor (9) is disposed remote from the central axis (10) and is designed for detecting both axially-directed force components (A) and radially-directed force components (B) acting at a force introduction position (11), the gap width of the annular gap (3) and the hardness of the elastomeric material (5) being selected such that upon loading the force introduction position (11) with a radial force component (B), a moment axis (M) is formed along the central axis (10).

2. The device of claim 1, characterized in that the narrow annular gap (3) is subdivided into first and second ring gap regions (3a, 3b) having different diameters and that radially expanded steps (7, 8) are provided therebetween for confining the ring space (6).

3. The device of claim 1 or claim 2, characterized in that the moment axis (M) is approximately arranged in the cross-sectional plane of the ring space (6).

4. The device of any of claims 1 to 3, characterized in that the pressure sensor (9) is arranged within the inner element (2) and projects through the step (7) to the ring space (6).

5. The device of any of claims 1 to 3, characterized in that the pressure sensor (9) is provided at the outer element (4) and projects through the step (8) to the ring space (6).

6. The device of any of claims 2 to 5, characterized in that the steps (7, 8) are aligned at an angle of about 75° with respect to the central axis (10) of the inner and outer elements (2, 4) and that the pressure sensor (9) is aligned normal to the steps (7, 8).

7. The device of any of claims 1 to 6, characterized in that the center axis (12) of the pressure sensor (9) is directed to the force introduction position (11).

8. The device of any of claims 1 to 7, characterized in that at least two pressure sensors (9, 19, 29) are provided, distributed along the periphery of the ring space (6).

9. The device of any of claims 1 to 8, characterized in that at the inner or outer element (2, 4), a projection (13) comprising the force introduction position (11) is provided, projecting beyond the annular gap (3, 3a, 3b) by a lever length (1).

10. Use of a force measuring device according to any of claims 1 to 9,
characterized in that
the moment acting at the force introduction position (11) is calculated in consideration of the lever length (1) and the distances of the pressure sensor(s) (9, 19, 29) from the central axis (10).

## Revendications

1. Dispositif de mesure de force, avec un élément intérieur rigide (2) en forme de piston et avec un élément extérieur rigide (4) en forme de cylindre, présentant un contour intérieur complémentaire de faces circonférentielles de l'élément intérieur (2), avec un étroit passage annulaire (3, 3a, 3b) entre des faces en vis-à-vis de l'élément intérieur et de l'élément extérieur, avec un matériau élastomère (5) essentiellement dépourvu de soufflures, qui est prévu dans le passage annulaire (3, 3a, 3b) et adhère fixement sur les faces de contact, avec un espace annulaire (6) formé entre l'élément intérieur (2) et l'élément extérieur (4), espace qui est également rempli de matériau élastomère (5), et avec au moins un capteur de pression (9), qui se trouve en contact de transmission de pression avec le matériau élastomère (5) dans l'espace annulaire (6),
**caractérisé** en ce que le capteur de pression (9) est disposé en position excentrique par rapport à l'axe médian (10) et est conçu pour enregistrer tant des composantes de force axiales (A) que des composantes de force radiales (B), qui agissent sur un point d'introduction de force (11), la grosseur du passage annulaire (3) et la dureté du matériau élastomère (5) étant choisies de telle sorte que, lors de la sollicitation du point d'introduction de force (11) par une composante de force radiale (B), un axe instantané (M) est formé sur l'axe médian (10).

2. Dispositif selon la revendication 1, **caractérisé** en ce que l'étroit passage annulaire (3) est divisé en un premier tronçon (3a) et un deuxième tronçon (3b) de passage annulaire, qui présentent des diamètres différents, et des gradins radialement élargis (7, 8) sont prévus entre ces tronçons pour limiter l'espace annulaire (6).

3. Dispositif selon la revendication 1 ou 2, **caractérisé** en ce que l'axe instantané (M) est disposé approximativement dans le plan de section de l'espace annulaire (6).

4. Dispositif selon une des revendications 1 à 3, **caractérisé** en ce que le capteur de pression (9) est disposé à l'intérieur de l'élément intérieur (2) et atteint à travers le gradin (7) l'espace annulaire (6).

5. Dispositif selon une des revendications 1 à 3, **caractérisé** en ce que le capteur de pression (9) est disposé sur l'élément extérieur (4) et atteint à travers le gradin (8) l'espace annulaire (6).

6. Dispositif selon une des revendications 2 à 5, **caractérisé** en ce que les gradins (7, 8) sont orientés sous un angle d'environ 75° par rapport à l'axe médian (10) de l'élément intérieur (2) et de l'élément extérieur (4), et le capteur de pression (9) est orienté perpendiculairement aux gradins (7, 8).

7. Dispositif selon une des revendications 1 à 6, **caractérisé** en ce que l'axe médian (12) du capteur de pression (9) est dirigé sur le point d'introduction de force (11).

8. Dispositif selon une des revendications 1 à 7, **caractérisé** en ce qu'au moins deux capteurs de pression (9, 19, 29) sont prévus, en étant répartis sur la périphérie de l'espace annulaire (6).

9. Dispositif selon une des revendications 1 à 8, **caractérisé** en ce qu'est prévu, sur l'élément intérieur (2) ou l'élément extérieur (4), un prolongement (13) pourvu du point d'introduction de force (11), prolongement qui fait saillie du passage annulaire (3, 3a, 3b) d'une longueur de levier (l).

10. Utilisation d'un dispositif de mesure de force selon une des revendications 1 à 9, **caractérisée** en ce que le couple de rotation agissant sur le point d'introduction de force (11) est calculé en tenant compte de la longueur de levier (l) et de la distance entre le ou les capteurs de pression (9, 19, 29) et l'axe médian (10).
